# EUROPEAN PATENT APPLICATION

(11) **EP 2 988 225 A2**
(43) Date of publication of application: **24.02.2016**
(21) Application number: 15178537.5
(22) Date of filing: 27.07.2015
(51) Int. Cl.: G06F 17/21, G06F 3/0488

(54) **DOCUMENT VIEWING DEVICE AND NON-TRANSITORY COMPUTER-READABLE RECORDING MEDIUM HAVING PROGRAM STORED THEREON**

(30) Priority: 13.08.2014 JP 2014165015
(71) Applicant: Konica Minolta, Inc., Tokyo 100-7015 (JP)
(72) Inventor: Inoue, Masayuki, Tokyo, 100-7015 (JP); Hyodo, Keiichiro, Tokyo, 100-7015 (JP); Shibata, Tetsuhiro, Tokyo, 100-7015 (JP)
(74) Representative: Henkel, Breuer & Partner

(57) **Abstract**

A document viewing device, including: a display unit; a display control unit that displays a document on the display unit by using a layout selected from a plurality of layouts; an additional writing input unit that receives an additional writing on the displayed document; and an additional writing information storing unit that stores additional writing information indicating contents of the received additional writing so as to relate the additional writing information to the layout which was used for displaying the document when the additional writing was received, wherein the display control unit further displays the contents of the additional writing, which are indicated by the additional writing information indicating the contents of the additional writing received on a part of the document, which is displayed on the display unit, and related to a layout which is same as the layout which is currently used for displaying the document.

## Description

### Technological Field

The present invention relates to a document viewing device and a non-transitory computer-readable recording medium having a program stored thereon, for displaying the document by using a layout which is selected among a plurality of layouts.

### Background

There is an information viewing device having the function for additionally inputting the information, such as characters or the like, in the document which is currently displayed, by the handwriting input or by adding a textbox. Further, there is a document viewing device in which a layout for displaying the document can be changed to each type of layout, such as a standard layout for displaying the document page by page, an Nin1 layout for displaying N (N is an integer which is not less than 2) pages of the document in the display area for one page by reducing N pages and arranging the reduced pages in the page number order, and the like.

Therefore, for example, in case that the document is displayed in the 2in1 layout, there are some cases that after the additional writing is carried out in handwriting so as to stride across two displayed pages, the layout is changed to the standard layout. In this case, in the document viewing device in which when the contents of the additional writing carried out in handwriting so as to stride across a plurality of pages are displayed in the standard layout, only a part of the additional writing, which is included in the page displayed in the standard layout is displayed, the handwritten contents cannot be suitably recognized.

### Description of the Related Art

In the information viewing apparatus disclosed in Japanese Patent Application Publication No. 2013-114412 (United States Patent Application Publication No.2013/139045), the handwritten contents which stride across a plurality of pages are assigned to one of the pages. Then, in case that this page is displayed, the whole of the handwritten contents assigned to the displayed page is displayed, for example, by shifting the display position.

There are some cases that the contents of the additional writing added to the document when the document was displayed in a specific layout, such as the 2in1 layout, are meaningful only in case that the document is viewed in the specific layout.

Further, in case that the whole of the additional writing assigned to each page is displayed in any layout, a user cannot recognize the layout which was used when the additional writing was input.

### Summary

The present invention is achieved to solve the above-described problem, and an object of the present invention is to provide a document viewing device and a non-transitory computer-readable recording medium which can display the document and the additional writing without breaking the relation between the additional writing and the layout which was used for displaying the document when the above additional writing was input.

To achieve at least one of the abovementioned objects, the gist of the present invention is reflected in the following inventions:
(1) A document viewing device, comprises:
   a display unit;
   a display control unit that displays a document on the display unit by using a layout selected from a plurality of layouts including a set of layouts in which numbers of pages to be displayed simultaneously are different from each other;
   an additional writing input unit that receives an additional writing on the document displayed on the display unit; and
   an additional writing information storing unit that stores additional writing information indicating contents of the additional writing received by the additional writing input unit so as to relate the additional writing information to the layout which was used for displaying the document when the additional writing was received,
   wherein the display control unit further displays the contents of the additional writing, which are indicated by first additional writing information indicating the contents of the additional writing received on a part of the document, which is displayed on the display unit, the first additional writing information being related to a layout which is same as the layout which is currently used for displaying the document.
   In the above invention, the additional writing information indicating the contents of the additional writing is stored so as to relate it to the layout which was used for displaying the document when the additional writing was received. In case that the part of the document, on which the additional writing was received, is displayed in the layout which is the same as the layout which was used when the additional writing is received, the contents of the additional writing are reproduced and displayed.
(2) In the document viewing device of (1), in case that second additional writing information indicating the contents of the additional writing received on the part of the document, which is displayed on the display unit, the second additional writing information being related to a layout except the layout which is currently used for displaying the document, is stored in the additional writing information storing unit, the display control unit displays guidance information indicating existence of the second additional writing information, on the display unit.
   In the above invention, a user is informed of the existence of the additional writing information related to the layout except the layout which is currently used for displaying the document.
(3) In the document viewing device of (2), in case that an operation for selecting the guidance information is received when the display control unit displays the document and the guidance information on the display unit, the display control unit changes the layout used for displaying the document to the layout which is related to the second additional writing information corresponding to the guidance information.
   In the above invention, in case that the operation for selecting the guidance information is received, the layout used for displaying the document is changed to the layout which is related to the additional writing information corresponding to the selected guidance information. Thereby, the contents of the additional writing, which are indicated by the additional writing information corresponding to the guidance information which is selected by the operation, are reproduced and displayed with the document which is displayed by changing the layout.
(4) In the document viewing device of (1), when the display control unit displays the document on the display unit in a state in which a full screen display is turned on, the display control unit displays, on the display unit, both of the contents of the additional writing, which are indicated by the first additional writing information, and the contents of the additional writing, which are indicated by second additional writing information indicating the contents of the additional writing received on the part of the document, which is displayed on the display unit, the second additional writing information being related to a layout except the layout which is currently used for displaying the document, and
   when the display control unit displays the document on the display unit in a state in which the full screen display is turned off, the display control unit displays the contents of the additional writing, which are indicated by the first additional writing information, on the display unit, but does not display the contents of the additional writing, which are indicated by the second additional writing information, on the display unit.
   In the above information, when the full screen display is turned on, all of the additional writings are reproduced and displayed. On the other hand, when the full screen display is turned off, only the additional writing related to the same layout as the layout which is currently used, is reproduced and displayed.
(5) In the document viewing device of any one of (1) to (4), when the display control unit displays the contents of the additional writing, which are indicated by second additional writing information related to a layout except the layout which is currently used for displaying the document, an operation for changing the contents of the additional writing, which are indicated by the second additional writing information, is prohibited.
   In the above invention, in case that the additional writing is reproduced and displayed while the document is displayed in the layout which is different from the layout which was used when the above additional writing was input, the operation for changing the contents of the above additional writing is prohibited.
(6) In the document viewing device of any one of (1) to (5), the plurality of layouts include an Nin1 layout for arranging N pages of the document in a display area for one page by reducing the N pages, where N is an integer which is not less than 2.
(7) The document viewing device of (6), further comprises: a page inserting unit that inserts a dummy page in the document,
   wherein in case that a new page is added in the document having the additional writing information related to the Nin1 layout, the page inserting unit additionally inserts the dummy page at a preceding page from N pages displayed in the Nin1 layout when the additional writing was received, so as to match the N pages of the document, which are displayed in the Nin1 layout when the contents of the additional writing, which are indicated by the additional writing information, are displayed, with the N pages displayed in the Nin1 layout when the additional writing corresponding to the additional writing information was added.
   In the above invention, even though the new page is inserted, the dummy page is inserted so as to match the N pages which are displayed in the Nin1 layout when the contents of the additional writing, which are indicated by the additional writing information related to the Nin1 layout, are reproduced and displayed, with the N pages displayed when the above additional writing was received (so as not to change the N page by inserting the new page).
(8) A non-transitory computer-readable recording medium storing a program, wherein the program causes an information processing apparatus to function as the document viewing device described in any one of (1) to (7).

According to the document viewing device and the non-transitory computer-readable recording medium, it is possible to display the document and the additional writing without breaking the relation between the additional writing and the layout which was used for displaying the document when the above additional writing was input.

### Brief Description of the drawings

The advantages and features provided by one or more embodiments of the invention will become more fully understood from the detailed description given hereinbelow and the appended drawings which are given by way of illustration only, and thus are not intended as a definition of the limits of the present invention, and wherein:
FIG. 1 is a view showing an external appearance of the document viewing device according to the embodiment;
FIG. 2 is a block diagram showing the electric schematic configuration of the document viewing device according to the embodiment;
FIG. 3 is a view showing each type of layouts which can be used for displaying the document by the document viewing device according to the embodiment;
FIG. 4 is a view showing an example of the data structure in which the data are stored so as to relate the layout to the additional writing information;
FIGS. 5A to 5D are views showing an example of the case in which the additional writing is displayed in the layout which is the same as the layout which was used when the additional writing was input;
FIGS. 6A to 6D are views showing an example of the displayed contents in case that the document viewing device informs a user of the existence of the object added in another layout;
FIG. 7 is a view showing an example of the displayed contents in case that the first page and the second page of the document which is the same as that of FIGS. 5A to 5D are displayed in the 2in1 layout by turning on the full screen display;
FIGS. 8A to 8C are views showing an example in which the contents of the additional writing are prohibited from being changed;
FIGS. 9A to 9D are views showing an example in which the dummy pages are additionally inserted along with the insertion of the new pages;
FIG. 10 is a flowchart showing the process for displaying the document by the document viewing device when the full screen display is turned off;
FIG. 11 is a flowchart showing the process for displaying the document by the document viewing device when the full screen display is turned off and for displaying the guidance information;
FIG. 12 is a flowchart showing the process for displaying the document by the document viewing device when the full screen display is turned on; and
FIG. 13 is a flowchart showing the process which is carried out by the document viewing device in case that the operation for inserting the new page is received.

### Description of the Preferred Embodiments

Hereinafter, an embodiment of the present invention will be described with reference to the drawings. However, the scope of the invention is not limited to the illustrated examples.

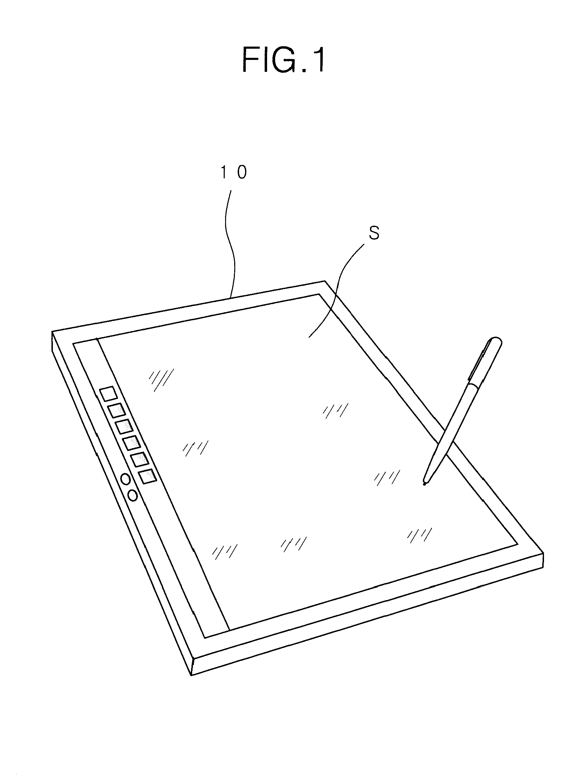

FIG. 1 shows an external appearance of the document viewing device 10 according to the embodiment. The document viewing device 10 can wirelessly communicate with an external device, such as a personal computer, an information processing apparatus or the like, via a wireless LAN or the like. The document viewing device 10 has the function for receiving the document data from the information processing apparatus or the like and for displaying the received document, the function for editing the document, the function for adding the object, such as lines, a text and the like, to the document by the text input or the handwriting input, and the like.

The document viewing device 10 is a portable terminal having the plate shape (a so-called tablet terminal), and almost the whole area of the front surface of the document viewing device 10 is a display surface S. On the display surface S, a touch panel for detecting the position on which the display surface S is touched by a finger, a pen or the like, is provided.

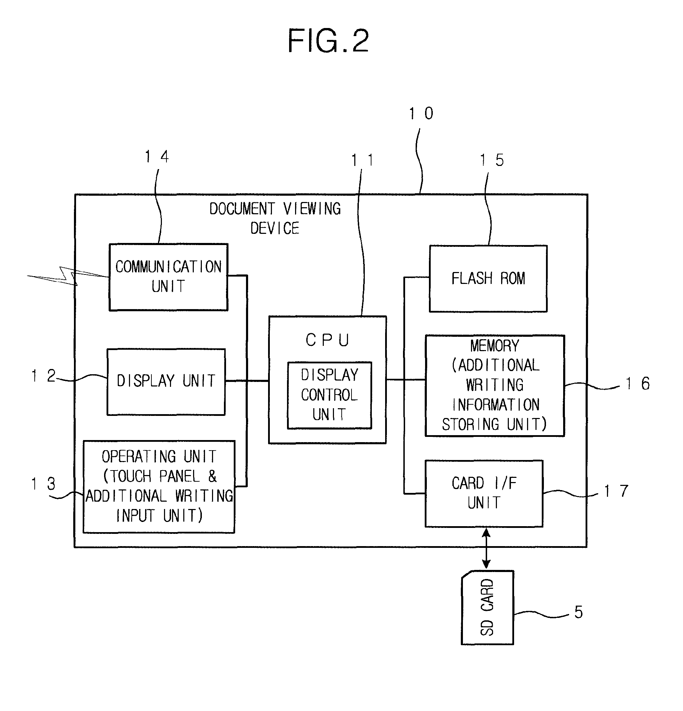

FIG. 2 shows the electric schematic configuration of the document viewing device 10. The document viewing device 10 comprises a CPU 11 as the control unit for entirely controlling the operation of the document viewing device 10. The CPU 11 is connected with a display unit 12, an operating unit 13, a communication unit 14, a flash ROM (Read Only Memory) 15, a memory 16, a card I/F unit 17, and the like.

The display unit 12 comprises a display device, such as a liquid crystal display, an electronic paper, or the like. The operating unit 13 is provided on the display surface S of the display unit 12, and is configured by a touch panel for detecting the position on which the display surface S is pushed by a finger, a pen or the like, operation switches arranged on the edge portion of the document viewing device 10, and the like. The operating unit 13 functions as the additional writing input unit for receiving the additional writing on the document displayed on the display unit 12.

The document viewing device 10 receives the handwriting input, such as the characters, the figure or the like, which is handwritten by a user via the touch panel. The display unit 12 and the operating unit 13 have the function as the software keyboard by displaying the keyboard on the display unit 12 and by detecting the pushing operation for each key of the keyboard by using the touch panel. The detecting method used in the touch panel may be optional, and may be carried out, for example, by using the electrostatic capacity, the analog/digital resistive film, the infrared rays, the ultrasonic waves, the electromagnetic induction or the like.

The communication unit 14 is connected with the network via the wireless communication, and has the function for communicating the information such as the document data stored in an external device, with the external device.

In the flash ROM 15, various types of programs, data and the like are stored. By executing various types of processings by the CPU 11 in accordance with the programs, the functions of the document viewing device 10 are realized. The CPU 11 functions as the display control unit for controlling the display of the document on the display unit 12.

The memory 16 is used as a work memory for temporarily storing various types of data when the CPU 11 executes the programs, and as a memory for temporarily storing the display data.

The card I/F unit 17 detachably connects the portable storing medium, such as the SD card 5 or the like. The document viewing device 10 has the function for reading the document data from the SD card 5 connected with the card I/F unit 17 and the function for writing the edited document data in the SD card 5.

Next, the layouts which are used for displaying the document by the document viewing device 10, will be explained.

The document viewing device 10 has the following layouts as the layout which can be used for displaying the document.
(1) Standard layout for displaying the document page by page on the display unit 12,
(2) 2in1 layout for displaying two pages of the document at once by reducing each page so as to stride across the two pages,
(3) 4in1 layout for displaying four pages of the document by reducing each page so as to arrange the four pages in a 2 x 2 matrix, and the like.

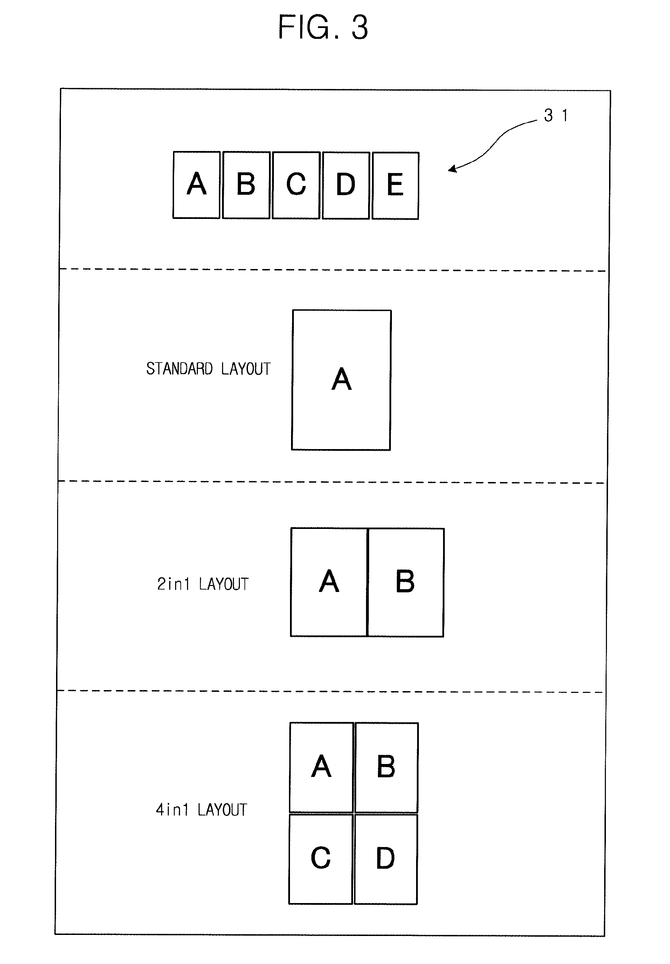

FIG. 3 shows the document 31 having a plurality of pages (in this example, 5 pages), an example in which the document 31 is displayed in the standard layout, an example in which the document 31 is displayed in the 2in1 layout and an example in which the document 31 is displayed in the 4in1 layout.

The document viewing device 10 receives the selection of the layout to be used for displaying the document among a plurality of types of the layouts which are previously prepared, from a user via the operating unit 13. Then, the CPU 11 (the display control unit) of the document viewing device 10 displays the document on the display unit 12 by using the selected layout.

Further, when the document viewing device 10 receives the additional writing on the document displayed on the display unit by the handwriting input or by the text input, the document viewing device 10 stores the additional writing information indicating the contents of the received additional writing in the memory 16 (the additional writing information storing unit) so as to relate the additional writing information to the document which is currently displayed and the layout which is used for displaying the above document. Instead of the memory 16, the flash ROM 15 may be used as the storing area for the additional writing information.

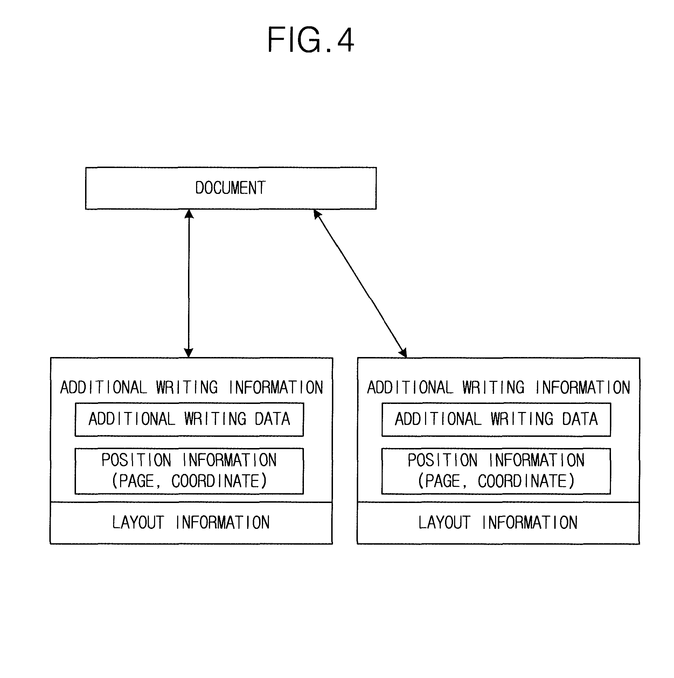

FIG. 4 shows an example of the additional writing information. The additional writing information includes the additional writing data indicating the contents of the additional writing (the added object) and the position information indicating the page(s) to which the added object is assigned and the position (the coordinate) of the added object in the above page(s). For example, in case of the handwriting input, the vector information indicating the locus of the handwriting is stored as the additional writing data. In case of the text input, the text is stored as the additional writing data. Further, for example, in case of the additional writing which was received when the first page and the second page were displayed in the 2in1 layout, as the position information, each page number of the first page and the second page and the coordinate of the starting point of the object (for example, the writing start position) are registered.

The additional writing information is stored so as to relate it to the layout information indicating the layout which was used for displaying the document when the object corresponding to the above additional writing information was added. In this example, by storing the additional writing information and the layout information as a set, the layout information is related to the additional writing information. Further, the additional writing information is related to the document which was displayed on the display unit 12 when the object corresponding to the above additional writing information was added.

When the document is displayed on the display unit 12 in an optional layout, in case that the additional writing information concerned with the displayed part (page(s)) of the document and related to the optional layout which is used for displaying the document, has been already stored in the additional writing information storing unit, the CPU 11 which functions as the display control unit controls the display unit 12 so as to further display the contents of the additional writing, which are indicated by the above additional writing information.

For example, the object added by the handwriting input or the like when the document was displayed in the 4in1 layout, is displayed so as to overlap it with the document in case that the page(s) in which the above added object was received is displayed in the 4in1 layout. On the other hand, in case that the page(s) in which the above added object was received is displayed in another layout, the above object is not displayed (or is displayed by changing the display form).

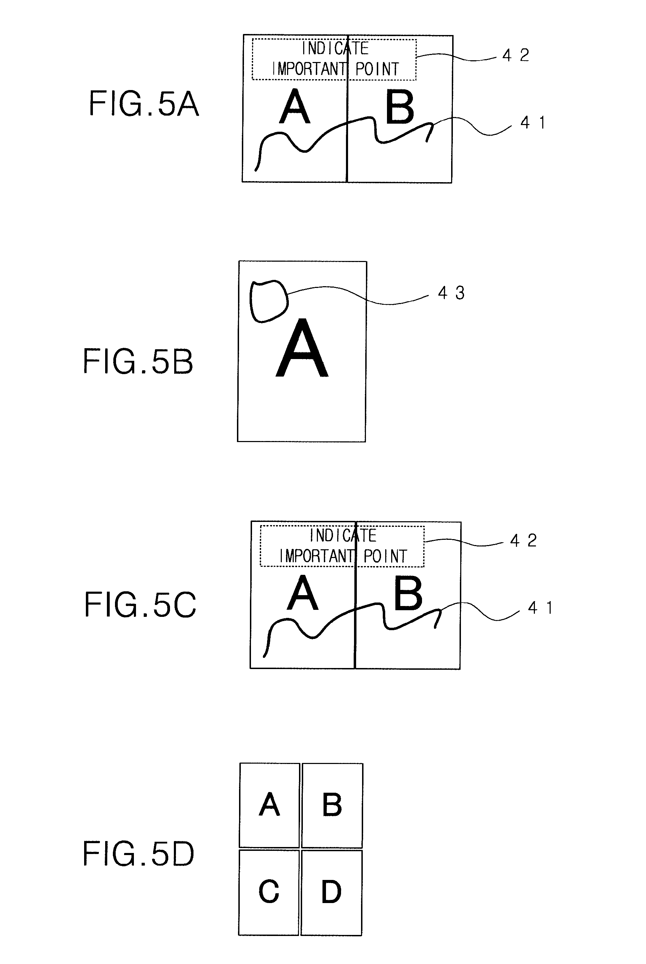

FIGS. 5A to 5D show the specific example of the above. In this example, as shown in FIG. 5A, in the situation in which the first page and the second page are displayed in the 2in1 layout, the handwritten object 41 and the object 42 which is added by inputting the text in the textbox are received. The additional writing information of the objects 41 and 42 is stored so as to relate the above additional writing information to the 2in1 layout. In the drawings, the frame of the textbox is indicated by a dashed line. In the actual device, the frame of the textbox can be hidden.

Then, even though the first page (or the second page) is displayed in the standard layout, the objects 41 and 42 which were added in the 2in1 layout are not displayed. FIG. 5B shows the situation in which the first page of the document shown in FIG. 5A is displayed in the standard layout. In the example of FIG. 5B, in the first page displayed in the standard layout, the handwritten object 43 is displayed so as to overlap it with the first page. The object 43 was previously added to the first page when the first page of the document was displayed in the standard layout. The additional writing information of the object 43 is stored so as to relate it to the standard layout.

Then, as shown in FIG. 5C, when the first page and the second page are displayed in the 2in1 layout again, the objects 41 and 42 which are related to the 2in1 layout are displayed in the 2in1 layout so as to overlap them with the first page and the second page of the document. At this time, the object 43 which is related to the standard layout is not displayed.

Further, as shown in FIG. 5D, in case that the first to the fourth pages of the document are displayed in the 4in1 layout, either of the objects 41 and 42 which are related to the 2in1 layout or the object 43 which is related to the standard layout is not displayed.

As described above, in the document viewing device 10 according to the embodiment, the added object is displayed when the document is displayed in the layout which is the same as the layout which was used when the above object was added. Therefore, the problem in which the added object is displayed so as to overlap it with the document which is currently displayed in the layout which is different from the layout used when the additional writing was received and then the user cannot recognize the original meaning of the object, is avoided.

Next, the case in which when the document is displayed on the display unit 12, the document viewing device 10 informs a user of the existence of the additional writing information related to the layout except the layout which is currently used for displaying the document, will be explained.

For example, in the above example of FIGS. 5A to 5D, when the document is displayed in the standard layout, the object which was added in another layout, such as the 2in1 layout, is not displayed. Therefore, even though the additional writing which is related to another layout exists, a user cannot recognize the existence of the above additional writing.

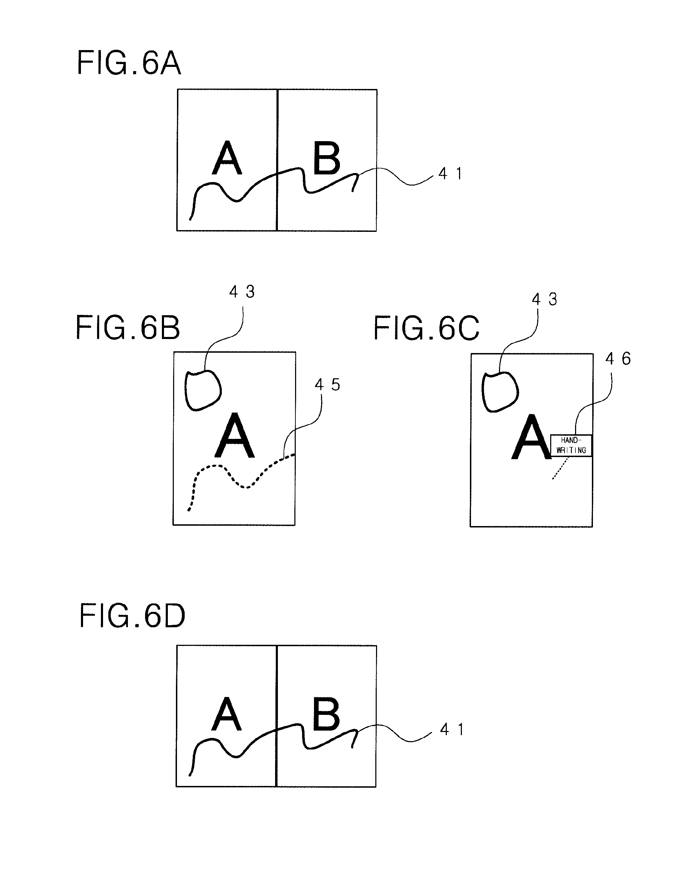

FIGS. 6A to 6D show an example of the displayed contents in case that the document viewing device 10 informs a user of the existence of the additional writing information which is added in another layout. FIG. 6A shows the situation in which the first page and the second page of the document are displayed in the 2in1 layout. In this example, the object 41 which is the contents of the additional writing, which are indicated by the additional writing information related to the 2in1 layout, is displayed so as to overlap it with the document.

FIG. 6B shows the situation in which the first page of the document shown in FIG. 6A is displayed in the standard layout. The document viewing device 10 displays the object 43 which is the contents of the additional writing, which are indicated by the additional writing information related to the standard layout, so as to overlap it with the first page of the document. Further, the document viewing device 10 displays the guidance information 45 indicating the existence of the additional writing information related to another layout.

The guidance information 45 indicates only the part which is overlapped with the first page in the object 41 corresponding to the additional writing information related to the 2in1 layout, by a different display form which is different from that of FIG. 6A. For example, the different display form includes a display form in which the object is displayed thinner than that of FIG. 6A, a display form in which the object is displayed by changing the line type, and the like.

FIG. 6C shows another example of the situation in which the first page of the document shown in FIG. 6A is displayed in the standard layout. In FIG. 6C, the document viewing device 10 informs a user of the existence of the additional writing information related to another layout by using a predetermined mark (the guidance information 46). The guidance information 46 indicates the type of the object corresponding to the additional writing information by using the text. In this example, because the object 41 is one which is input in handwriting, the rectangular tag in which the text "handwriting" is described is displayed as the guidance information 46. Further, because the object 41 strides across the first page and the second page as shown in FIG. 6A, in this example, the guidance information 46 is displayed in the first page near the boundary between the first page and the second page.

In the situation in which the document viewing device 10 displays the document and the guidance information 45 (or 46) on the display unit 12, when the document viewing device 10 receives the selection operation for selecting the guidance information 45 or 46 (for example, the operation in which the guidance information is touched) from the user, the layout used for displaying the document is changed to the layout related to the additional writing information corresponding to the selected guidance information. That is, the document is displayed by changing the current layout to the layout which was used when the object corresponding to the selected guidance information 45 or 46 was added.

FIG. 6D shows the situation in which the document is displayed again by changing the layout in case that the selection operation for selecting the guidance information 45 is received in FIG. 6B or in case that the selection operation for selecting the guidance information 46 is received in FIG. 6C. In this example, because the additional writing information corresponding to the guidance information 45 or 46 is related to the 2in1 layout, the document is displayed by changing the layout to be used to the 2in1 layout.

### <Changing display setting>

The document viewing device 10 can change the display method for displaying the contents of the additional writing (the added object), which are indicated by the additional writing information. In this example, when the full screen display is turned on, the document viewing device 10 displays the contents of the additional writing, which are indicated by the first additional writing information indicating the contents of the additional writing received on the part (page(s)) of the document, which is displayed on the display unit 12, so as to overlap the contents with the document. The first additional writing information is related to the layout which is the same as the layout which is currently used for displaying the above document. Further, the document viewing device 10 also displays the contents of the additional writing, which are indicated by the second additional writing information indicating the contents of the additional writing received on the part (page(s)) of the document, which is displayed on the display unit 12, so as to overlap the contents with the document. The second additional writing information is related to the layout except the layout which is currently used for displaying the above document.

On the other hand, when the full screen display is turned off, the document viewing device 10 displays the contents of the additional writing, which are indicated by the above first additional writing information, so as to overlap the contents with the document. However, the document viewing device 10 does not display the contents of the additional writing, which are indicated by the above second additional writing information.

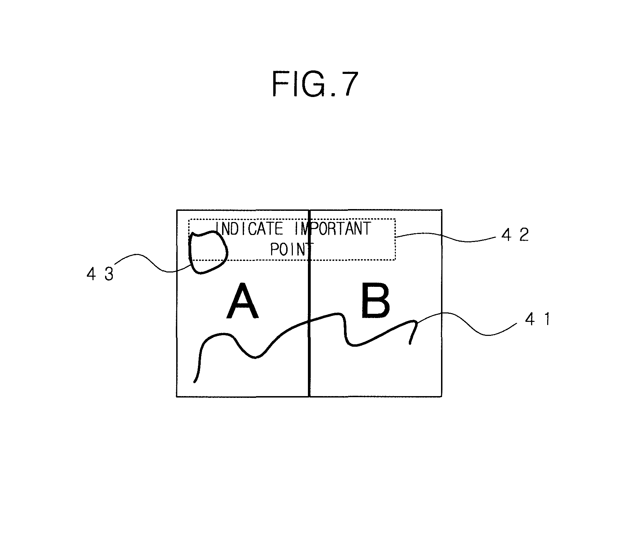

FIGS. 5A to 5D and FIGS. 6A to 6D show an example of the displayed contents in case that the full screen display is turned off. FIG. 7 shows an example of the displayed contents in case that the first page and the second page of the document shown in FIGS. 5A to 5D are displayed in the 2in1 layout by turning on the full screen display.

Next, the operation in which when the contents of the additional writing, which are indicated by the additional writing information related to the layout except the layout which is currently used for displaying the document are displayed on the display unit 12, the contents of the above additional writing are prohibited from being changed, will be explained.

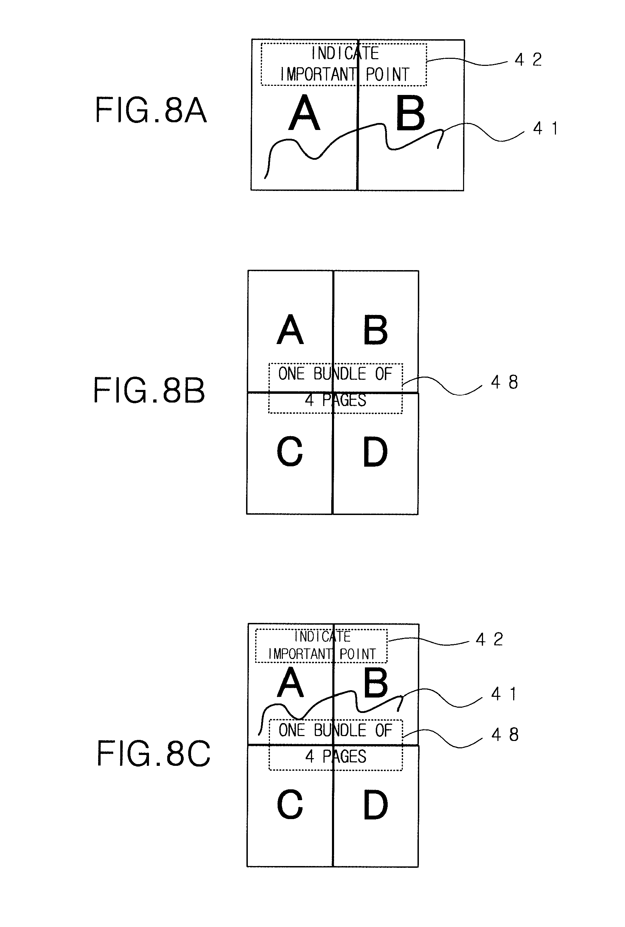

FIGS. 8A to 8C show an example of the above operation. FIG. 8A shows an example in which the first page and the second page of the document are displayed in the 2in1 layout by turning off the above full screen display. In FIG. 8A, the handwritten object 41 corresponding to the additional writing information related to the 2in1 layout and the object 42 which is added by inputting the text in the textbox are displayed so as to them with the document.

FIG. 8B shows an example in which the first to the fourth pages of the document are displayed in the 4in1 layout by turning off the above full screen display. In FIG. 8B, the object 48 (the object which is added by inputting the text in the textbox) corresponding to the additional writing information related to the 4in1 layout is displayed so as to it with the document.

FIG. 8C shows an example in which the first to the fourth pages of the document shown in FIGS. 8A and 8B are displayed in the 4in1 layout by turning on the above full screen display. In FIG. 8C, the objects 41 and 42 corresponding to the additional writing information related to the 2in1 layout and the object 48 corresponding to the additional writing information related to the 4in1 layout are displayed together so as to overlap them with the document.

In the display state shown in FIG. 8C, when the object 48 corresponding to the additional writing information related to the 4in1 layout is selected by the double touch operation or the like, the contents of the object 48 (the contents of the text input in the textbox) can be changed. That is, the document viewing device 10 receives the change in the object corresponding to the additional writing information related to the layout which is the same as the layout which is currently used for displaying the device. In case that the handwritten object, the document viewing device 10 receives only the change for deleting a part of or the whole of the object.

On the other hand, in case of the handwritten object 41 and the object 42 added by inputting the text in the textbox, which correspond to the additional writing information related to the 2in1 layout, because the above objects correspond to the additional writing information related to the layout which is different from the layout in which the document is currently displayed, the document viewing device 10 prohibits the above objects from being changed.

For example, when the object related to the 4in1 layout, which strides across four pages is displayed in the 2in1 layout, only two pages of the four pages which were displayed when the object was added are displayed. Further, only a part of the object (the part which is overlapped with the displayed two pages) is displayed. Therefore, it is difficult for a user to recognize the original meaning of the object. As a result, there is some possibility that the user wrongly changes the above object. In the document viewing device 10 according to the embodiment, because the added object is prohibited from being changed in case that the document is displayed in the layout which is different from the layout used when the above object was added, the above wrong change is prevented.

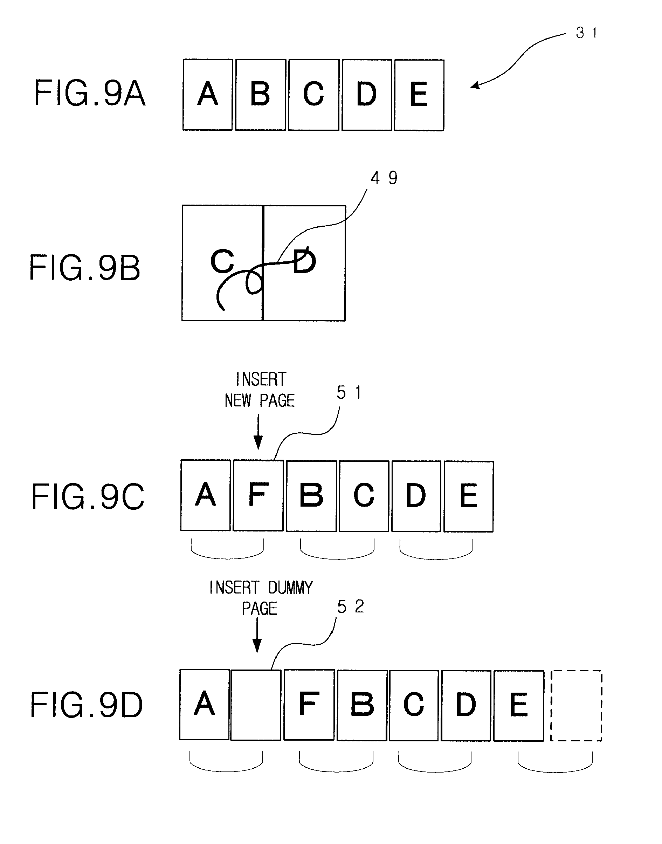

Next, the process which is carried out in case that a new page is additionally inserted will be explained by using FIGS. 9A to 9D.

The process is explained by using the document 31 having the first to the fifth pages shown in FIG. 9A as an example. In the situation in which the third page (the page in which the character "C" is described) and the fourth page (the page in which the character "D" is described) of the document 31 are displayed in the 2in1 layout as shown in FIG. 9B, the handwritten object 49 is added. Then, as shown in FIG. 9C, a new page 51 (the page in which the character "F" is described) is additionally inserted at the preceding page from the third page.

Thereby, the combinations of two pages to be displayed in the 2in1 layout are as follows: the combination of the first page (the page in which the character "A" is described) and the new page 51, the combination of the second page (the page in which the character "B" is described) and the third page (the page in which the character "C" is described), and the combination of the fourth page (the page in which the character "D" is described) and the fifth page (the page in which the character "E" is described). Therefore, the object 49 which was added in the situation of FIG. 9B, cannot be displayed so as to overlap it with the document in the display state (the state shown in FIG. 9B) which is the same as the display state which was used when the object 49 was added.

In case that the new page is inserted in the document having the additional writing information related to the Nin1 layout (N is an optional integer which is not less than 2), the document viewing device 10 additionally inserts the required number of dummy pages at the preceding pages from the pages displayed in the Nin1 layout when the additional writing was carried out, so as to satisfy the following condition. The condition is that the N pages of the document, which are displayed in the Nin1 layout to overlap the contents of the additional writing, which are indicated by the above additional writing information, are matched with the N pages which were displayed in the Nin1 layout when the additional writing corresponding to the above additional writing information was carried out. The CPU 11 which functions as the page inserting unit additionally inserts the dummy pages.

For example, in the example of FIG. 9D, the dummy page 52 is inserted in the immediately previous page of the new page 51. Thereby, the combinations of two pages to be displayed in the 2in1 layout are as follows: the combination of the first page (the page in which the character "A" is described) and the dummy page 52, the combination of the new page 51 and the second page (the page in which the character "B" is described), the combination of the third page (the page in which the character "C" is described) and the fourth page (the page in which the character "D" is described) as shown in FIG. 9D. Therefore, the handwritten object 49 is displayed so as to overlap it with the pages which are the same as the pages which were displayed when the additional writing was carried out.

In the example of FIGS. 9A to 9D, it is sufficient that the dummy page 52 is inserted at the preceding page from the third page (the page in which the character "C" is described). The dummy page 52 is preferably a blank page.

The number of the dummy pages to be additionally inserted is determined according to the number "m" of the pages which is newly inserted and the number "N" of the Nin1 layout related to the additional writing information. That is, the number "P" of the dummy pages to be additionally inserted is calculated by using the equation: P = (N-k), where k is the remainder of dividing "m" by "N".

For example, in case that one new page is inserted at the preceding page from the fifth page of the document in which the additional writing information concerned with the fifth to the eighth pages exists, three dummy pages may be inserted at the preceding page from the fifth page.

The dummy page may be additionally inserted in the document when the new page is added. Alternatively, the dummy page may be temporarily inserted only when the document is displayed in the Nin1 layout. In the latter case, when the document in which the new page is added is displayed in the standard layout, the dummy page is not additionally inserted. Only when the document in which the new page is added is displayed in the Nin1 layout (N is an integer which is not less than 2), the dummy page is temporarily added to the document. When the display of the document in the Nin1 layout is finished, the dummy page is deleted from the document.

Next, the process which is carried out by the document viewing device 10 will be explained by using the flowchart.

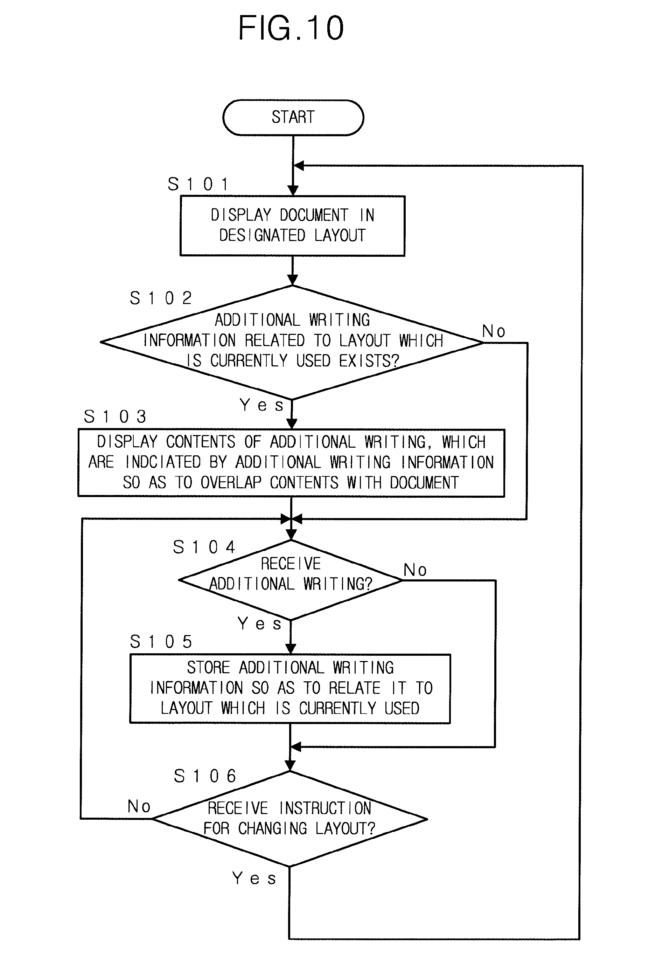

FIG. 10 shows the flowchart of the process for displaying the document by the display viewing device 10. In this process, the full screen display is turned off. Firstly, the document viewing device 10 displays the document in the layout designated by a user (Step S101). Next, it is checked whether the additional writing information which is concerned with the currently displayed page (s) of the document and which is related to the layout which is currently used for displaying the document is stored or not (Step S102). In case that the above additional writing information is not stored (Step S102; No), the process proceeds to Step S104. In case that the above additional writing information is stored (Step S102; Yes), the contents of the additional writing, which are indicated by the above additional writing information are displayed so as to overlap them with the document which is currently displayed (Step S103). Then, the process proceeds to Step S104.

In Step S104, it is checked whether the additional writing is received from a user. In case that the additional writing is not received (Step S104; No), the process proceeds to Step S106. In case that the additional writing is received (Step S104; Yes), the additional writing information indicating the contents of the additional writing is generated and the additional writing information is stored so as to relate it to the layout which is currently used (Step S105). Then, the process proceeds to Step S106.

In Step S106, it is checked whether the instruction for changing the layout is received from a user or not. In case that the instruction for changing the layout is not received (Step S106; No), the process is continued by returning to Step S104. In case that the instruction for changing the layout is received (Step S106; Yes), the process is continued by returning to Step S101. That is, the document is displayed again in the changed layout (Step S101), and in case that the additional writing information which is concerned with the currently displayed page(s) and which is related to the changed layout is stored (Step S102; Yes), the contents of the additional writing (the object), which are indicated by the above additional writing information are displayed so as to overlap them with the document which is currently displayed (Step S103) .

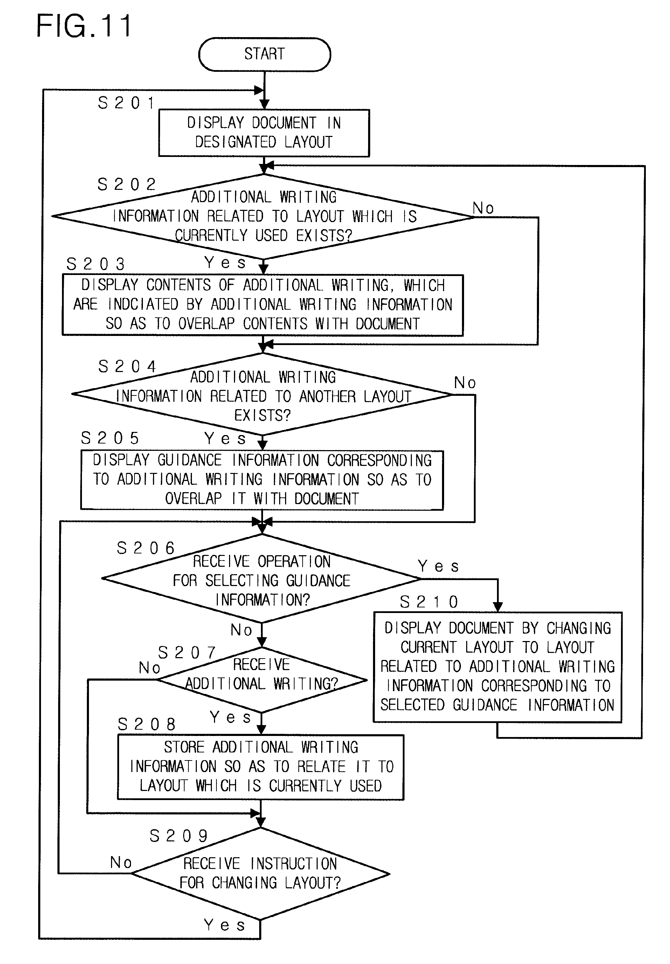

FIG. 11 shows the flowchart of the process for displaying the document by the document viewing device 10 when the full screen display is turned off and for displaying the guidance information. The document viewing device 10 displays the document in the layout designated by a user (Step S201). Next, it is checked whether the additional writing information which is concerned with the currently displayed page(s) of the document and which is related to the layout which is currently used for displaying the document is stored or not (Step S202). In case that the above additional writing information is not stored (Step S202; No), the process proceeds to Step S204. In case that the above additional writing information is stored (Step S202; Yes), the contents of the additional writing, which are indicated by the above additional writing information are displayed so as to overlap them with the document which is currently displayed (Step S203). Then, the process proceeds to Step S204.

In Step S204, it is checked whether the additional writing information which is concerned with the currently displayed page (s) of the document and which is related to the layout except the layout which is currently used for displaying the document, is stored or not. In case that the above additional writing information is not stored (Step S204; No), the process proceeds to Step S206.

In case that the above additional writing information is stored (Step S204; Yes), the guidance information indicating the existence of the above additional writing information is displayed so as to overlap it with the document which is currently displayed (Step S205). Then, the process proceeds to Step S206.

In Step S206, it is checked whether the operation for selecting the guidance information is received from a user or not. In case that the operation for selecting the guidance information is received (Step S206; Yes), the document is displayed again by changing the current layout to the layout related to the additional writing information corresponding to the selected guidance information (Step S210). Then, the process proceeds to Step S202.

That is, in case that the additional writing information concerned with the page(s) which is currently displayed in the changed layout, and related to the changed layout is stored (Step S202; Yes), the contents of the additional writing (the object) which are indicated by the above additional writing information are displayed so as to overlap them with the document which is currently displayed (Step S203). In case that the additional writing information concerned with the page(s) which is currently displayed and related to the layout except the changed layout is stored (Step S204; Yes), the guidance information indicating the existence of the above additional writing information is displayed so as to overlap it with the document which is currently displayed (Step S205).

In case that the operation for selecting the guidance information is not received from a user (Step S206; No), it is checked whether the additional writing is received from a user (Step S207). In case that the additional writing is not received (Step S207; No), the process proceeds to Step S209. In case that the additional writing is received (Step S207; Yes), the additional writing information indicating the contents of the additional writing is generated and the additional writing information is stored so as to relate it to the layout which is currently used (Step S208). Then, the process proceeds to Step S209.

In Step S209, it is checked whether the instruction for changing the layout is received from a user or not. In case that the instruction for changing the layout is not received (Step S209; No), the process is continued by returning to Step S206. In case that the instruction for changing the layout is received (Step S209; Yes), the process is continued by returning to Step S201.

That is, the document is displayed again in the changed layout (Step S201), and in case that the additional writing information which is concerned with the currently displayed page(s) and which is related to the changed layout is stored (Step S202; Yes), the contents of the additional writing (the object), which are indicated by the above additional writing information are displayed so as to overlap them with the document which is currently displayed (Step S203). Further, in case that the additional writing information which is concerned with the currently displayed page(s) and which is related to the layout except the changed layout, is stored (Step S204; Yes), the guidance information indicating the existence of the above additional writing information is displayed so as to overlap it with the document which is currently displayed (Step S205).

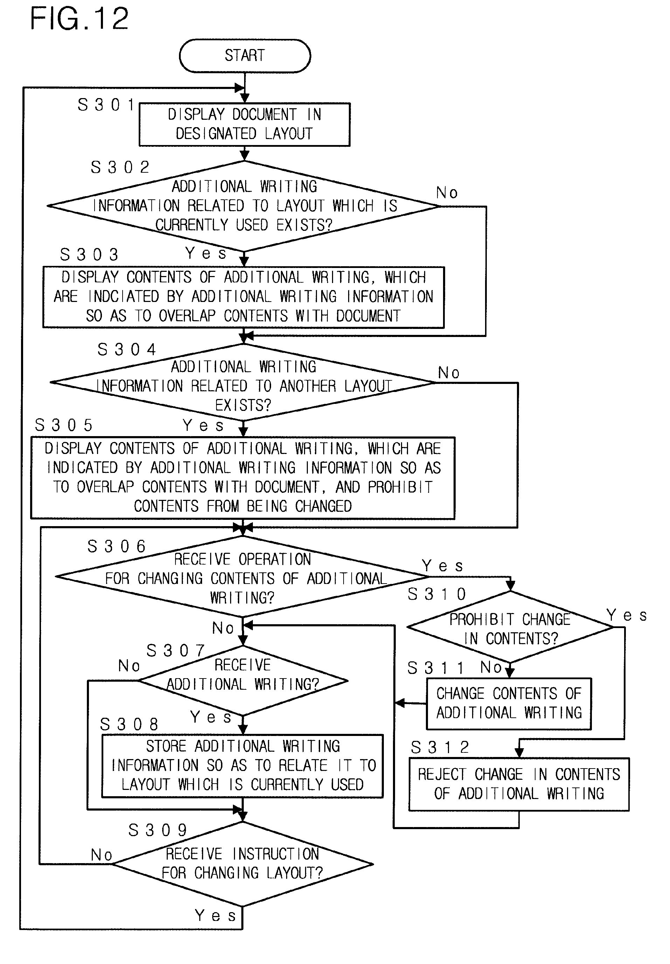

FIG. 12 shows the flowchart of the process for displaying the document by the document viewing device 10 when the full screen display is turned on. The document viewing device 10 displays the document in the layout designated by a user (Step S301). Next, it is checked whether the additional writing information which is concerned with the currently displayed page(s) of the document and which is related to the layout which is currently used for displaying the document is stored or not (Step S302). In case that the above additional writing information is not stored (Step S302; No), the process proceeds to Step S304. In case that the above additional writing information is stored (Step S302; Yes), the contents of the additional writing, which are indicated by the above additional writing information are displayed so as to overlap them with the document which is currently displayed (Step S303). Then, the process proceeds to Step S304.

In Step S304, it is checked whether the additional writing information which is concerned with the currently displayed page(s) of the document and which is related to the layout except the layout which is currently used for displaying the document, is stored or not. In case that the above additional writing information is not stored (Step S304; No), the process proceeds to Step S306.

In case that the above additional writing information is stored (Step S304; Yes), the contents of the additional writing (the object), which are indicated by the above additional writing information are displayed so as to overlap them with the document and the object is prohibited from being changed (Step S305). Then, the process proceeds to Step S306.

In Step S306, it is checked whether the operation for changing the contents of the additional writing, which are currently displayed, is received or not. In case that the operation for changing the object is received (Step S306; Yes), it is checked whether the object to be changed by the received operation is prohibited from being changed or not (Step S310). In case that the above object is prohibited from being changed (Step S310; Yes), the change in the object is rejected (Step S312). Then, the process proceeds to Step S307. In case that the above object is not prohibited from being changed (Step S310; No), the change in the object is accepted (Step; S311). Then, the process proceeds to Step S307.

For example, when the object to be changed is the text which is input in the textbox, the addition or the deletion of the text or the change in the text is accepted. When the object to be changed is the handwritten object, the deletion of a part of or the whole of the object is accepted, but the addition of the object (for example, the extension of the line) is not accepted.

In Step S307, it is checked whether the additional writing is received from a user. In case that the additional writing is not received (Step S307; No), the process proceeds to Step S309. In case that the additional writing is received (Step S307; Yes), the additional writing information indicating the contents of the additional writing is generated and the additional writing information is stored so as to relate it to the layout which is currently used (Step S308). Then, the process proceeds to Step S309.

In Step S309, it is checked whether the instruction for changing the layout is received from a user or not. In case that the instruction for changing the layout is not received (Step S309; No), the process is continued by returning to Step S306. In case that the instruction for changing the layout is received (Step S309; Yes), the process is continued by returning to Step S301.

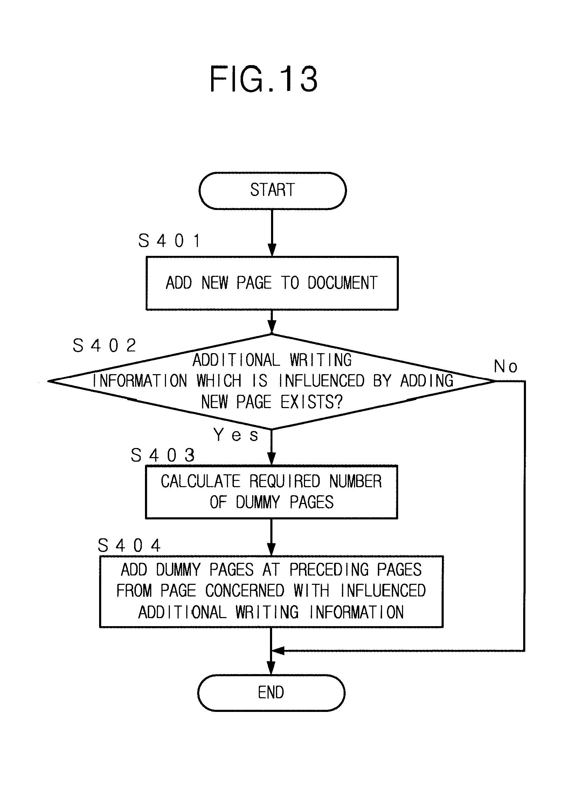

FIG. 13 shows the process which is carried out by the document viewing device 10 in case that the instruction for inserting the new page is received. In case that the instruction for inserting the new page at an optional page position is received, the new page is added at the above page position in the document which is currently displayed (Step S401). Next, it is checked whether the additional writing information which is influenced by adding the above new page exists in the additional writing information stored so as to relate it to the document (Step S402). Specifically, it is checked whether the additional writing information related to the Nin1 layout and concerned with the succeeding page from the inserted new page exists.

In case that the influenced additional writing information does not exist (Step S402; No), the process is ended. In case that the influenced additional writing information exists (Step S402; Yes), the required number of the dummy pages is calculated (Step S403). Then, the N pages which were displayed in the Nin1 layout when the additional writing corresponding to the influenced additional writing information was received, are specified. Further, the required dummy pages are inserted at the preceding pages from the specified N pages (Step S404), and then the process is ended. The N pages concerned with the above additional writing information may be specified from the position information (pages) in the additional writing information shown in FIG. 4.

As described above, the embodiment is explained by using the drawings. However, in the present invention, the concrete configuration is not limited to the above embodiment. In the present invention, various modifications of the above embodiment or the addition of various functions or the like to the embodiment can be carried out without departing from the gist of the invention.

In this embodiment, the additional writing information is prepared every when the additional writing is received, and the additional writing information is stored so as to relate it to the layout used for displaying the document when the additional writing information is prepared. However, the additional writing information corresponding to the received additional writing is temporarily held, and when the layout is changed or when the operation for finishing the display of the document is received, the held additional writing information may be related to the layout which has been used until just before. Further, the data structure shown in FIG. 4 is illustrated as an example, and the method for relating the information may be optional.

In the embodiment, the standard layout, the 2in1 layout and the like are exemplified as the layout. However, for example, the present invention may be applied by treating the display status in which the document is scrolled and the scroll of the document is stopped at an optional position, as the layout. For example, in case that the additional writing is input when the scroll is stopped at the position at which the lower half portion of the third page and the upper half portion of the fourth page are simultaneously displayed, the additional writing information corresponding to the input additional writing is stored so as to relate it to the layout information indicating the status in which the lower half portion of the third page and the upper half portion of the fourth page are simultaneously displayed.

The guidance information shown in the embodiment is explained as an example. The guidance information may be an optional mark, an object of which the display form is changed, or the like.

The document viewing device may control the display of the contents of the additional writing as follows. The object added in one layout may be displayed so as to overlap it with the document in case that the document is displayed in another layout including the one layout which was used when the additional writing was input. On the other hand, the object added in one layout is not displayed in case that the document is displayed in another layout which does not include the one layout which was used when the additional writing was input. For example, the object added in the standard layout is also displayed in the 2in1 layout and the 4in1 layout which include the display status of the standard layout. Further, the object added in the 2in1 layout is also displayed in the 4in1 layout including the display status of the 2in1 layout, but is not displayed in the standard layout which does not include the standard layout.

In the embodiment, the document viewing device 10 which can receive the handwriting input is explained as an example. However, the document viewing device may be a device which does not have the function for receiving the handwriting input. Further, by instructing an information processing apparatus to execute the predetermined program, the information processing apparatus may operate as the document viewing device according to the present invention.

It is preferable that the additional writing information is stored by adding it to the document as a part of the document data. In this case, for example, when the document is transmitted to an external device, the additional writing information is also transmitted with the document.

Although embodiments of the present invention has been described and illustrated in detail, it is clearly understood that the same is by way of illustrated and example only and is not to be taken by way of limitation, the scope of the present invention being interpreted by terms of the appended claims.

## Claims

1. A document viewing device, comprising:
a display unit;
a display control unit that displays a document on the display unit by using a layout selected from a plurality of layouts including a set of layouts in which numbers of pages to be displayed simultaneously are different from each other;
an additional writing input unit that receives an additional writing on the document displayed on the display unit; and
an additional writing information storing unit that stores additional writing information indicating contents of the additional writing received by the additional writing input unit so as to relate the additional writing information to the layout which was used for displaying the document when the additional writing was received,
wherein the display control unit further displays the contents of the additional writing, which are indicated by first additional writing information indicating the contents of the additional writing received on a part of the document, which is displayed on the display unit, the first additional writing information being related to a layout which is same as the layout which is currently used for displaying the document.

2. The document viewing device of claim 1, wherein in case that second additional writing information indicating the contents of the additional writing received on the part of the document, which is displayed on the display unit, the second additional writing information being related to a layout except the layout which is currently used for displaying the document, is stored in the additional writing information storing unit, the display control unit displays guidance information indicating existence of the second additional writing information, on the display unit.

3. The document viewing device of claim 2, wherein in case that an operation for selecting the guidance information is received when the display control unit displays the document and the guidance information on the display unit, the display control unit changes the layout used for displaying the document to the layout which is related to the second additional writing information corresponding to the guidance information.

4. The document viewing device of claim 1, wherein when the display control unit displays the document on the display unit in a state in which a full screen display is turned on, the display control unit displays, on the display unit, both of the contents of the additional writing, which are indicated by the first additional writing information, and the contents of the additional writing, which are indicated by second additional writing information indicating the contents of the additional writing received on the part of the document, which is displayed on the display unit, the second additional writing information being related to a layout except the layout which is currently used for displaying the document, and
when the display control unit displays the document on the display unit in a state in which the full screen display is turned off, the display control unit displays the contents of the additional writing, which are indicated by the first additional writing information, on the display unit, but does not display the contents of the additional writing, which are indicated by the second additional writing information, on the display unit.

5. The document viewing device of any of claims 1 to 4, wherein when the display control unit displays the contents of the additional writing, which are indicated by second additional writing information related to a layout except the layout which is currently used for displaying the document, an operation for changing the contents of the additional writing, which are indicated by the second additional writing information, is prohibited.

6. The document viewing device of any of claims 1 to 5, wherein the plurality of layouts include an Nin1 layout for arranging N pages of the document in a display area for one page by reducing the N pages, where N is an integer which is not less than 2.

7. The document viewing device of claim 6, further comprising: a page inserting unit that inserts a dummy page in the document,
wherein in case that a new page is added in the document having the additional writing information related to the Nin1 layout, the page inserting unit additionally inserts the dummy page at a preceding page from N pages displayed in the Nin1 layout when the additional writing was received, so as to match the N pages of the document, which are displayed in the Nin1 layout when the contents of the additional writing, which are indicated by the additional writing information, are displayed, with the N pages displayed in the Nin1 layout when the additional writing corresponding to the additional writing information was added.

8. The document viewing device of claim 1, wherein the additional writing input unit receives the additional writing on the document displayed on the display unit, by a handwriting input.

9. The document viewing device of claim 1, wherein the additional writing input unit receives the additional writing on the document displayed on the display unit, by inputting a text in a textbox.

10. A non-transitory computer-readable recording medium storing a display control program, wherein the program causes an information processing apparatus comprising a display control unit that displays a document on a display unit; an additional writing input unit that receives an additional writing on the document displayed on the display unit; and an additional writing information storing unit that stores additional writing information indicating contents of the additional writing received by the additional writing input unit, to execute:
displaying the document on the display unit by using a layout selected from a plurality of layouts including a set of layouts in which numbers of pages to be displayed simultaneously are different from each other;
storing the additional writing information indicating the contents of the additional writing received by the additional writing input unit so as to relate the additional writing information to the layout which was used for displaying the document when the additional writing was received; and
instructing the display unit to further display the contents of the additional writing, which are indicated by first additional writing information indicating the contents of the additional writing received on a part of the document, which is displayed on the display unit, the first additional writing information being related to a layout which is same as the layout which is currently used for displaying the document.

11. The non-transitory computer-readable recording medium of claim 10, wherein in case that second additional writing information indicating the contents of the additional writing received on the part of the document, which is displayed on the display unit, the second additional writing information being related to a layout except the layout which is currently used for displaying the document, is stored in the additional writing information storing unit, the program causes the information processing apparatus to instruct the display unit to display guidance information indicating existence of the second additional writing information.

12. A non-transitory computer-readable recording medium storing a program, wherein the program causes an information processing apparatus to function as the document viewing device of any of claims 1 to 7.
